# EUROPEAN PATENT APPLICATION

(11) **EP 4 744 820 A1**
(43) Date of publication of application: **20.05.2026**
(21) Application number: 24838520.5
(22) Date of filing: 14.06.2024
(51) Int. Cl.: B23P 15/00, B60K 1/04, B60L 50/60

(54) **METHOD FOR MANUFACTURING MOUNTING SLEEVE, AND MOUNTING SLEEVE, BATTERY BOX ASSEMBLY AND VEHICLE**

(30) Priority: 13.07.2023 CN 202310856195; 07.12.2023 CN 202311687626
(71) Applicant: Minth Automotive Technology Research & Development Co., Ltd., Ningbo, Zhejiang 315800 (CN)
(72) Inventor: WANG, Qian, Ningbo, Zhejiang 315800 (CN); CHEN, Tao, Ningbo, Zhejiang 315800 (CN); NI, Hengguo, Ningbo, Zhejiang 315800 (CN); XIONG, Dong, Ningbo, Zhejiang 315800 (CN)
(74) Representative: Murgitroyd & Company
(86) International application number: PCT/CN2024/099284
(87) International publication number: WO 2025/011262

(57) **Abstract**

The present invention relates to the technical field of machining. Provided are a method for manufacturing a mounting sleeve, and the mounting sleeve, a battery box assembly and a vehicle. The method for manufacturing a mounting sleeve comprises: performing cold heading on a bar to obtain a first preformed mounting sleeve, wherein the first preformed mounting sleeve has a first flange surface, which has a diameter smaller than that of a flange surface of a mounting sleeve to be manufactured; performing a spheroidizing annealing treatment on the first preformed mounting sleeve, performing cold extrusion on the first preformed mounting sleeve to obtain a second preformed mounting sleeve, wherein the second preformed mounting sleeve has a second flange surface, which has a diameter greater than that of the flange surface of the mounting sleeve to be manufactured; and cutting the second preformed mounting sleeve to obtain a sleeve structure. The mounting sleeve manufactured by using the manufacturing method is of relatively good quality, and the manufacturing method also facilitates a reduction in the machining cost and can avoid the problems of material folding, disorder and cracking caused by direct cold heading of the second flange surface.

## Description

### Technical Field

The present invention relates to the technical field of machining, and more particularly, to a method for manufacturing a mounting sleeve, and the mounting sleeve, a battery box assembly, and a vehicle.

### Background Art

With the popularity of electric vehicles, the capacity of battery box used in electric vehicles is also constantly improving. As the connection carrier of battery box and vehicle body, the mounting sleeve is often set in the battery box. The mounting sleeve plays a vital role in carrying the battery box and achieving the sealed connection of the battery box. The mounting sleeve often includes a sleeve portion and a flange portion. The flange portion has a flange surface diameter which is substantially greater than the diameter of the sleeve portion. The length of the sleeve portion which is required is substantially greater than the length of the flange portion because the sleeve portion is required to extend throughout the battery box when mounted to the battery box. Therefore, in order to manufacture the mounting sleeve more easily, the current method for manufacturing the mounting sleeve is to form the sleeve portion and the flange portion separately, and then laser weld the two parts to form the mounting sleeve. However, since the sleeve portion and the flange portion are welded, such a manufacturing method would result in poor reliability of the connection between the sleeve portion and the flange portion, so that there is a risk of seal failure between the sleeve portion and the flange portion, thereby affecting the quality of the mounting sleeve.

### Summary of the Invention

The present invention aims to solve the problem that the current method for manufacturing a mounting sleeve leads to a failure of the seal between a sleeve and a flange, thereby affecting the quality of the mounting sleeve.

In order to solve the above-mentioned problems, in a first aspect, the present invention provides a method for manufacturing a mounting sleeve, characterized in that the mounting sleeve includes a sleeve structure including a sleeve body and a flange plate; the sleeve body is integrally formed with the flange plate; wherein the method for manufacturing the mounting sleeve includes:
performing cold heading on a bar to obtain a first preformed mounting sleeve, wherein the first preformed mounting sleeve has a first flange surface, which has a diameter smaller than that of a flange surface of the mounting sleeve to be manufactured;
performing a spheroidizing annealing treatment on the first preformed mounting sleeve;
performing cold extrusion on the first preformed mounting sleeve to obtain a second preformed mounting sleeve, wherein the second preformed mounting sleeve has a second flange surface, which has a diameter greater than that of the flange surface of the mounting sleeve to be manufactured; and
cutting the second preformed mounting sleeve to obtain a sleeve structure.

Optionally, the performing cold heading on a bar includes:
performing a first cold heading treatment on the bar by a cold header to form a first preformed rod by strongly constraining a lower part of the bar;
performing a second cold heading treatment on the bar by the cold header to upset an upper part of the bar to form a first preformed truncated cone;
performing a third cold heading treatment on the bar by the cold header to back-extrude and form a first preformed hole on the first preformed truncated cone;
performing a fourth cold heading treatment on the bar by the cold header to back-extrude a second preformed hole on the first preformed rod;
performing a fifth cold heading treatment on the bar by the cold header so as to back-extrude and stretch the first preformed hole into a third preformed hole and back-extrude and stretch the second preformed hole into a fourth preformed hole; and
performing a sixth cold heading treatment on the bar by the cold header to back-extrude and form a hexagonal hole at the bottom of the third preformed hole and back-extrude and stretch the fourth preformed hole into a fifth preformed hole.

Optionally, the strong constraint ratio of the first cold heading treatment is 35%-41%; and/or,
the upsetting ratio of the second cold heading treatment is 27%-33%; and/or,
the back-extrusion ratio of the third cold heading treatment is 13%-19%; and/or,
the back-extrusion ratio of the fourth cold heading treatment is 29%-35%; and/or,
the back-extrusion ratio of the fifth cold heading treatment is 47%-53%; and/or,
the back-extrusion ratio of the sixth cold heading treatment is 10%-14%.

Optionally, the performing a spheroidizing annealing treatment on the first preformed mounting sleeve includes:
placing the first preformed mounting sleeve into a spheroidizing degradation furnace, and performing a first heat preservation treatment under the conditions of 660-700°C, and then performing a second heat preservation treatment under the conditions of 380-420°C.

Optionally, the time of the first heat preservation treatment is 7-9 h, and the time of the second heat preservation treatment is 1-3 h.

Optionally, after the performing cold extrusion on the first preformed mounting sleeve to obtain a second preformed mounting sleeve, wherein the second preformed mounting sleeve has a second flange surface, which has a diameter greater than that of the flange surface of the mounting sleeve to be manufactured, and before the cutting the second preformed mounting sleeve to obtain a sleeve structure, the method further includes:
successively performing a quenching treatment and a tempering treatment on the second preformed mounting sleeve.

Optionally, the hardness of the second preformed mounting sleeve after the quenching treatment and the tempering treatment is above HV1 195.

Optionally, the quenching treatment includes placing the second preformed mounting sleeve into a quenching furnace and maintaining the temperature at 850-890°C for 60-120 min, and then taking the second preformed mounting sleeve out of the quenching furnace and cooling to room temperature; and
the tempering treatment includes: continuing to place the second preformed mounting sleeve into the quenching furnace and maintaining the temperature at 530-570°C for 60-120 min, then removing the second preformed mounting sleeve from the quenching furnace and cooling to room temperature.

Optionally, after the cutting the second preformed mounting sleeve to obtain a sleeve structure, the method further includes:
mounting the sleeve structure on a swing-type plating hanger, and driving the sleeve structure to swing up and down by a swing device of the swing-type plating hanger; and
electroplating the sleeve structure by spraying a plating solution by a jet device to an inner cavity of the sleeve structure.

In comparison with the prior art, the present invention provides a method for manufacturing a mounting sleeve, which has, but is not limited to the technical effects below.

In the method for manufacturing the mounting sleeve of the present invention, firstly, the cold heading is performed on the bar so as to plastically deform the bar to obtain a first preformed mounting sleeve having a first flange surface. The first flange surface can be used as a basis for extending to a flange surface of a desired sleeve structure. Then, the spheroidizing annealing treatment is performed on the first preformed mounting sleeve to achieve annealing recrystallization spheroidization, reducing the cold hardening of the first flange surface, so as to improve the plasticity of the first preformed mounting sleeve. Then, the cold extrusion is performed on the first preformed mounting sleeve so as to extend and expand the first flange surface into a second flange surface to obtain a second preformed mounting sleeve. Finally, the second preformed mounting sleeve is cut to cut various surfaces of the second preformed mounting sleeve, such as a cavity wall, an end surface and a surface, so as to improve the dimensional accuracy of the second preformed mounting sleeve, thereby obtaining a desired sleeve structure. The above-mentioned manufacturing method belongs to an integral forming scheme, which does not require separate laser welding, ensures the sealability between the sleeve body and the flange plate. The quality of the mounting sleeve is better, and also, the reduction of the laser welding process is more conducive to reducing the processing cost. In addition, the combination of cold heading, spheroidizing annealing and cold extrusion can improve the plasticity of the parts by spheroidizing annealing. Meanhwile, the surface of the material is not easy to crack when the second flange surface is cold extruded, which makes the forming easier and avoids the problems of material folding, disorder and cracking caused by direct cold heading of the second flange surface.

In a second aspect, the present invention also provides a mounting sleeve including a sleeve structure including a sleeve body and a flange plate. The sleeve body is integrally formed with the flange plate.

Compared with the prior art, in the present invention, the sleeve body and the flange plate are integrally formed into a sleeve structure, which does not require separate laser welding, ensures the sealability between the sleeve body and the flange plate. The quality of the mounting sleeve is better, and also, the reduction of the laser welding process is more conducive to reducing the machining cost.

Optionally, the mounting sleeve further includes a sleeve nut; the outer wall of the sleeve body is provided with an external thread; and the sleeve nut is sheathed outside the sleeve body and is screwed with the external thread.

Optionally, the inner wall of the sleeve body is provided with a hexagonal hole for the insertion of an auxiliary tool to assist the fastening of the sleeve nut to the sleeve body.

Optionally, the sleeve body is integrally formed with the flange plate by a cold heading treatment, a hot forging process, or a spin forming process.

Optionally, the mounting sleeve further includes a fastening bolt and a fastening nut, wherein the flange plate includes a second pedestal and a first pedestal; the second pedestal is a cylindrical structure; the diameter of the cylindrical structure is greater than the diameter of the sleeve body; one end of the cylindrical structure is connected to one end of the sleeve body; the other end of the cylindrical structure is folded outwardly to extend to form the first pedestal;
a head end of the fastening bolt is located in the second pedestal; and a screw part of the fastening bolt extends through the sleeve body and is fixed by the fastening nut.

Optionally, the outer edge of the first pedestal is provided with an annular groove portion provided coaxially with the second pedestal; and the annular groove portion is provided with a sealant structure therein.

Optionally, the sealant structure has a thickness in the range of 0.8 mm to 1.2 mm in the axial direction of the first pedestal; and the radial dimension of the annular groove portion is 0.10 to 0.15 times the diameter of the first pedestal.

Optionally, when the inner wall of the sleeve body is provided with the hexagonal hole, the height of the hexagonal hole ranges from 5.5 mm to 6.5 mm; and the second pedestal has a height ranging from 15 mm to 18 mm.

Optionally, the inner cavity and/or the outer surface of the sleeve structure is provided with an electroplated layer.

In a third aspect, the present invention also provides a battery box assembly including a battery box and a mounting sleeve as described above, wherein the battery box assembly further includes a battery pack; the battery box includes a box body and an intermediate transverse girder which is provided in the box body to divide the box body into at least two cavities within which the battery pack is mounted.

Accordingly, since the battery box assembly includes the mounting sleeve, the battery box assembly has at least the full effect of the mounting sleeve, which will not be described in detail herein.

Optionally, a plurality of grooves are spaced apart at a side of the intermediate transverse girder away from the bottom plate of the box body; the sleeve structure of the mounting sleeve is successively provided through the bottom plate and the grooves of the intermediate transverse girder; and and the sleeve nut of the mounting sleeve is located in the groove and abuts against the intermediate transverse girder.

Optionally, the battery box further includes a water cooling plate provided inside the box body and connected in contact with a bottom wall of the battery pack; and the mounting sleeve penetrates through a bottom plate of the box body, the water cooling plate and the intermediate transverse girder in sequence.

In a fourth aspect, the present invention also provides a vehicle including a battery box assembly as described above, and further including a chassis to which the battery box assembly is mounted.

Thus, since the vehicle includes the battery box assembly, the vehicle has at least all of the technical effects of the battery box assembly, which will not be described in detail herein.

### Brief Description of the Drawings

Fig. 1 is a structurally schematic view of a conventional mounting sleeve;
Fig. 2 is a schematic flow chart illustrating a method for manufacturing a mounting sleeve according to an embodiment of the present invention;
Fig. 3 is a schematic process diagram of a cold heading treatment of a bar according to an embodiment of the present invention;
Fig. 4 is a schematic process diagram illustrating a cold extrusion process of a first preformed mounting sleeve according to an embodiment of the present invention;
Fig. 5 is a front view of a swing-type plating hanger according to an embodiment of the present invention;
Fig. 6 is a side view of the swing-type plating hanger according to an embodiment of the present invention;
Fig. 7 is a schematic view I of a sleeve structure of the mounting sleeve according to an embodiment of the present invention;
Fig. 8 is a structurally schematic vertical sectional view of a battery box assembly according to an embodiment of the present invention;
Fig. 9 is an enlarged view of a structure shown at A in Fig. 8;
Fig. 10 is a structurally schematic view of a battery box assembly according to an embodiment of the present invention;
Fig. 11 is an enlarged view of a structure shown at B in Fig. 10;
Fig. 12 is a structurally schematic view II of the mounting sleeve according to an embodiment of the present invention; and
Fig. 13 is a structurally schematic view III of the mounting sleeve according to an embodiment of the present invention.

Description of Reference Numerals:
11-sleeve body, 111-external thread, 12-flange plate, 13-welding connection surface, 2-bar, 21-first rod, 22-first preformed rod, 221-second preformed hole, 222-fourth preformed hole, 223-fifth preformed hole, 23-first preformed truncated cone, 231-first preformed hole, 232-third preformed hole, 233-hexagonal hole, 24-first pedestal, 241-annular groove portion, 25-second pedestal, 31-upper mold, 32-lower mold, 33-first preformed mounting sleeve, 34-second preformed mounting sleeve, 41-conductive hook, 411-copper electrode, 42-swing device, 43-sleeve structure, 44-jet device, 5-sleeve nut, 6-box body, 61-bottom plate, 7-intermediate transverse girder, 71-groove, 8-water cooling plate.

### Detailed Description of the Invention

To make the above objects, features and advantages of the present invention more apparent, a detailed description of specific embodiments of the present invention will be made with reference to the accompanying drawings.

Note that in the coordinate system XYZ provided herein, the forward direction of the X-axis represents the right direction; the reverse direction of the X-axis represents the left direction; the forward direction of the Y-axis represents the front direction; the reverse direction of the Y-axis represents the rear direction; the forward direction of the Z-axis represents the upper direction; and the reverse direction of the Z-axis represents the lower direction.

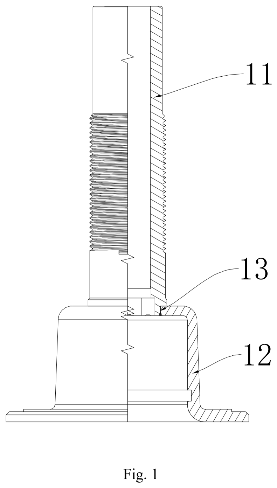

In order to facilitate an understanding of the present invention, the background art will first be described in further detail. With reference to Fig. 1, at present, a mounting sleeve includes a sleeve body 11 and a flange plate 12 which are connected in sequence along an axial direction thereof. The length of the sleeve body 11 is much greater than the length of the flange plate 12, and the diameter of the flange surface of the flange plate 12 is much greater than the diameter of the sleeve body 11. If the mounting sleeve is to be integrally formed and processed, it is difficult and the processing yield is low. Therefore, generally, in a conventional manufacturing method, the sleeve body 11 and the flange plate 12 are machined separately, and then the sleeve body 11 and the flange plate 12 are welded and spliced together to finally obtain a mounting sleeve. Accordingly, there is a welding connection surface 13 between the sleeve body 11 and the flange plate 12, which is prone to seal failure problems, resulting in a lower quality of the mounting sleeve.

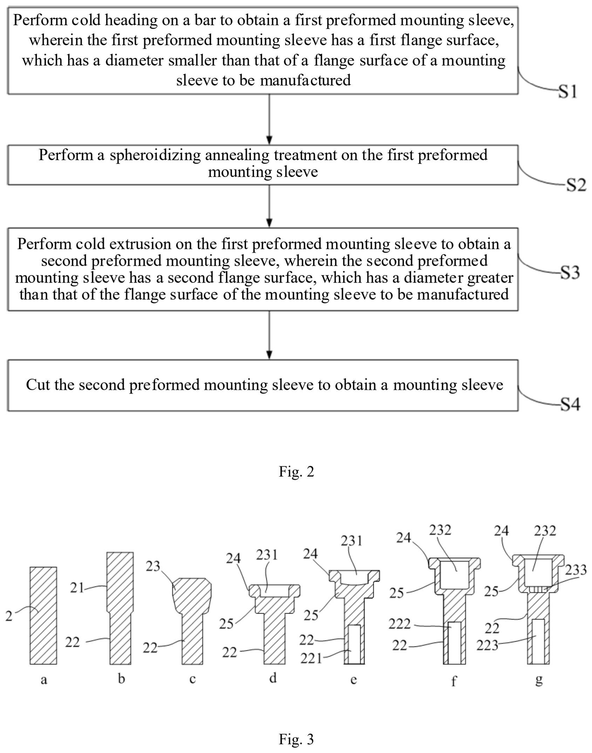

In view of this, as shown in Fig. 2, an embodiment of the present invention provides a method for manufacturing a mounting sleeve. The mounting sleeve includes a sleeve structure including a sleeve body 11 and a flange plate 12. The sleeve body 11 and the flange plate 12 are integrally formed. The method for manufacturing the mounting sleeve includes the steps below.

Step S1, the cold heading is performed on a bar so as to obtain a first preformed mounting sleeve, wherein the first preformed mounting sleeve has a first flange surface, which has a diameter smaller than that of a flange surface of a mounting sleeve to be manufactured.

It will be appreciated that the volume of the bar, which is the raw material for the cold heading treatment, is relatively close to the volume of the mounting sleeve to be produced. In particular, the bar may be selected to be a smooth-surfaced, crack-free, residue-free, and rust-free blank. It can also be appreciated that since the first preformed mounting sleeve is subsequently cold-extruded and cut to become a mounting sleeve to be manufactured, the overall shape of the first preformed mounting sleeve is close to the mounting sleeve to be manufactured, having a first preformed sleeve body corresponding to a sleeve body of the mounting sleeve to be manufactured and a first preformed flange corresponding to a flange of the mounting sleeve to be manufactured, and an end face of the first preformed flange plate is a first flange surface. It will be appreciated that the mounting sleeve to be manufactured is a mounting sleeve designed and to be shaped, having pre-set dimensions.

Step S2, a spheroidizing annealing treatment is performed on the first preformed mounting sleeve.

Step S3, the cold extrusion is performed on the first preformed mounting sleeve to obtain a second preformed mounting sleeve, wherein the second preformed mounting sleeve has a second flange surface, which has a diameter greater than that of the flange surface of the mounting sleeve to be manufactured.

It will be appreciated that the shape of the second preformed mounting sleeve is closer to the mounting sleeve to be manufactured than the shape of the first preformed mounting sleeve, and has a second preformed sleeve body and a second preformed flange, the end face of the second preformed flange plate being the second flange surface.

Step S4, the second preformed mounting sleeve is cut to obtain a sleeve structure.

In the present embodiment, firstly, the cold heading is performed on the bar so as to plastically deform the bar to obtain a first preformed mounting sleeve having a first flange surface. The first flange surface can be used as a basis for extending to a flange surface of the mounting sleeve to be manufactured. Then, the spheroidizing annealing treatment is performed on the first preformed mounting sleeve to achieve annealing recrystallization spheroidization, reducing the cold hardening of the first flange surface, so as to improve the plasticity of the first preformed mounting sleeve. Then, the cold extrusion is performed on the first preformed mounting sleeve so as to extend and expand the first flange surface into a second flange surface to obtain a second preformed mounting sleeve. Finally, the second preformed mounting sleeve is cut to cut various surfaces of the second preformed mounting sleeve, such as a cavity wall, an end surface and a surface, so as to improve the dimensional accuracy of the second preformed mounting sleeve, thereby obtaining a desired sleeve structure. The above-mentioned manufacturing method belongs to an integral forming scheme, which does not require separate laser welding, ensures the sealability between the sleeve body and the flange plate. The quality of the manufactured mounting sleeve is better, and also, the reduction of the laser welding process is more conducive to reducing the processing cost. In addition, the combination of cold heading, spheroidizing annealing and cold extrusion can improve the plasticity of the parts by spheroidizing annealing. Meanhwile, the surface of the material is not easy to crack when the second flange surface is cold extruded, which makes the forming easier and avoids the problems of material folding, disorder and cracking caused by direct cold heading of the second flange surface.

Further, referring to Fig. 3, the process of cold heading the bar 2 specifically includes the steps below.

Step S11, the bar 2 is subjected to the first cold heading treatment by a cold header to form a first preformed rod 22 by strongly constraining a lower part of the bar 2.

Specifically, the cold header may be a cold header with the model of Springtime CBP-256S. The bar 2 may be a bar 2 having a length of 136 mm and a diameter of 33 mm, as seen in Fig. 3a for details. The first cold heading treatment can be performed by a movable die of a cold heading machine. After the first cold heading treatment, the bar 2 undergoes plastic deformation. With particular reference to Fig. 3b, the upper part of the bar 2 is thickened to form a first rod 21 with a diameter of 33.2 mm, and the lower part is strongly constrained to become a first preformed rod 22 with a diameter of 25.75 mm.

Step S12, the bar 2 is subjected to the second cold heading treatment by a cold header to upset an upper part of the bar 2 to form a first preformed truncated cone 23.

The second cold heading treatment can be completed by a movable die of a cold header. After the second cold heading treatment, the bar 2 continues to undergo plastic deformation. With particular reference to Fig. 3c, the upper part of the bar 2 continues to be thickened to form a first preformed truncated cone 23 with a maximum diameter of 48.5 mm, and the diameter of the first preformed rod 22 at the lower part of the bar 2 continues to be thickened to 25.8 mm.

Step S13, the bar 2 is subjected to the third cold heading treatment by the cold header to back-extrude and form a first preformed hole 231 on the first preformed truncated cone 23.

The third cold heading treatment may be performed by a movable die of the cold header. After the third cold heading treatment, the bar 2 continues to be plastically deformed, thereby forming the first preformed hole 231. Specifically, referring to Fig. 3d, the first preformed hole 231 extends downwards from the upper end surface of the first pedestal 24, and the depth of the first preformed hole 231 is close to the thickness of the first pedestal 24. More specifically, after the third cold heading treatment, the first preformed truncated cone 23 of the upper part of the bar 2 is deformed into a first pedestal 24 and a second pedestal 25 which are disposed above and below. The first pedestal 24 having a diameter of 64 mm is back-extruded to form the first preformed hole 231. The second pedestal 25 has a diameter of 48.7 mm. The diameter of the first preformed rod 22 at the lower part of the bar 2 is changed to 25.85 mm and the length thereof is changed to 71.14 mm,.

Step S14, the bar 2 is subjected to the fourth cold heading treatment by the cold header to back-extrude and form the second preformed hole 221 on the first preformed rod 22.

The fourth cold heading treatment may be performed by a movable die of the cold header. After the fourth cold heading treatment, the bar 2 continues to be plastically deformed, thereby forming the second preformed hole 221. Specifically, referring to Fig. 3e, the second preformed hole 221 extends upwards from the lower end surface of the first preformed rod 22. More specifically, after the fourth cold heading treatment, the diameter of the first pedestal 24 at the upper part of the bar 2 is thickened to 65 mm. The diameter of the second pedestal 25 is thickened to 48.8 mm. The diameter of the first preformed rod 22 at the lower part of the bar 2 is changed to 25.9 mm and the length is changed to 92.5 mm. A second preformed hole 221 having a diameter of 15.5 mm and a depth of 55 mm is back-extruded and formed on the first preformed rod 22.

Step S15, the bar 2 is subjected to the fifth cold heading treatment by the cold header to back-extrude and stretch the first preformed hole 231 into a third preformed hole 232, and back-extrude and stretch the second preformed hole 221 into a fourth preformed hole 222.

The fifth cold heading treatment can be completed by the three-hole push tube module of the cold header. After the fifth cold heading treatment, the bar 2 continues to undergo plastic deformation, so as to form the third preformed hole 232 and the fourth preformed hole 222. Specifically, referring to Fig. 3f, the third preformed hole 232 also extends downwards from the upper end surface of the first pedestal 24, but has a depth greater than the thickness of the first pedestal 24 and close to the overall thickness of the first and second table bodies 24, 25. The fourth preformed hole 222 extends upwards from the lower end surface of the first preformed rod 22, but has a depth greater than that of the second preformed hole 221. More specifically, after the fifth cold heading treatment, the diameter of the second pedestal 25 in the upper part of the bar 2 is thickened to 48.9 mm. The first preformed hole 231 in the first pedestal 24 is back-extruded and drawn into a third preformed hole 232 having a diameter of 35 mm and a length of 42 mm. The diameter of the first preformed rod 22 in the lower part of the bar 2 is changed to 25.95 mm and the length is changed to 97.5 mm. A fourth preformed hole 222 having a depth of 60 mm is back-extruded and formed on the second preformed hole 221.

Step S16, the bar 2 is subjected to the sixth cold heading treatment by the cold header to back-extrude the hexagonal hole 233 at the bottom of the third preformed hole 232 and to back-extrude and stretch the fourth preformed hole 222 into a fifth preformed hole 223.

The sixth cold heading treatment can be completed by the three-hole push tube module of the cold heading machine. After the sixth cold heading treatment, the bar 2 continues to undergo plastic deformation so as to form a hexagonal hole 233 and a fifth preformed hole 223. Specifically, referring to Fig. 3g, the hexagonal hole 233 is located in the middle of the bottom of the third preformed hole 232. The fifth preformed hole 223 also extends upwards from the lower end surface of the first preformed rod 22, but has a depth greater than the depth of the fourth preformed hole 222. Specifically, after the sixth cold heading treatment, the diameter of the second pedestal 25 at the upper part of the bar 2 is thickened to 49 mm. The bottom of the third preformed hole 232 is back-extruded to form the hexagonal hole 233. The diameter of the first preformed rod 22 at the lower part of the bar 2 is changed to 26 mm, and the length is changed to 102.5 mm. A fifth preformed hole 223 having a depth of 63 mm is back-extruded and formed on the fourth preformed hole 222. Meanwhile, the bar 2 is finally cold-headed into a first preformed mounting sleeve, and the end face of the first pedestal body 24 is a first flange surface.

In this embodiment, the reasonable arrangement of six cold heading treatments can make the bar 2 deform continuously and the overall shape gradually approach to the sleeve structure to be produced, which can ensure that the deformation flow lines of each process are not broken, the stress of the workpiece is within the stress range of the mold, and the cold heading forming effect is good.

Further, the above-mentioned six cold heading treatments satisfy at least one of the following conditions: the strong constraint ratio of the first cold heading is 35%-41%; the upsetting ratio of the second cold heading treatment is 27%-33%; the back-extrusion ratio of the third cold heading treatment is 13%-19%; the back-extrusion ratio of the fourth cold heading treatment is 29%-35%; the back-extrusion ratio of the fifth cold heading treatment is 47%-53%; and the back-extrusion ratio of the sixth cold heading treatment is 10%-14%.

The strong constraint ratio for the first cold heading treatment is 35%-41%, and may be for example 35%, 39%, 41%, and preferably 39%. The upsetting ratio for the second cold heading treatment is 27-33%, and may be for example 27%, 31%, 33%, preferably 31%. The back-extrusion ratio for the third cold heading treatment is 13%-19%, and may be for example 13%, 17%, 19%, preferably 17%. The back-extrusion ratio for the fourth cold heading treatment is 29%-35%, and may be for example 29%, 33%, 35%, and preferably 33%. The back-extrusion ratio for the fifth cold heading treatment is 47%-53%, and may be for example 47%, 51%, 53%, preferably 51%. The back-extrusion ratio for the sixth cold heading treatment is 10%-14%, and may be for example 10%, 12%, 14%, preferably 12%.

In the present embodiment, by limiting the strong constraint ratio, the upsetting ratio, and the respective back-extrusion ratios within the above ranges, it is possible to better ensure that the deformation flow line does not break each time of the cold heading treatment.

Further, the performing a spheroidizing annealing treatment on the first preformed mounting sleeve includes:
placing the first preformed mounting sleeve into a spheroidizing degradation furnace, and performing a first heat preservation treatment under the conditions of 660-700°C, and then performing a second heat preservation treatment under the conditions of 380-420°C..

The temperature conditions of the first heat preservation treatment are 660-700°C, and may be for example 660°C, 690°C, 700°C, preferably 690°C; and the temperature condition of the second heat preservation treatment is 380-420°C, and may be for example 380°C, 400°C, 420°C, and preferably 400°C.

In this embodiment, when the temperature is higher than the above-mentioned temperature range, the carbides are dissolved more, the austenite is homogenized to a large extent, and flaky pearlite is easily obtained, resulting in a hard and brittle material structure which has cracks in the subsequent cold extrusion process. When the temperature is lower than the above-mentioned temperature range, the flaky pearlite in the original material structure is also difficult to dissolve, which is not conducive to the subsequent cold extrusion process. Therefore, by limiting the two heat preservation treatments to the corresponding temperature range, the hard and brittle material structure can be avoided from cracking in the subsequent cold extrusion process, and the flaky pearlite can also be avoided from being difficult to dissolve, which is not conducive to the subsequent cold extrusion process. The first preformed mounting sleeve after spheroidizing annealing has better plastic properties.

Further, the time of the first heat preservation treatment is 7-9 h, and the time of the second heat preservation treatment is 1-3 h.

The time of the first heat preservation treatment is 7-9 h, such as 7 h, 8 h, 9 h, and preferably 8 h; and the time of the second heat preservation treatment is 1-3 h, such as 1 h, 2 h, 3 h, preferably 2 h.

In this embodiment, when the time of the first heat preservation treatment is higher than the above-mentioned range, the homogenization of austenite is promoted, which is not conducive to spheroidization. When the time of the first heat preservation treatment is lower than the above-mentioned range, the lamellar structure in the original structure is difficult to be completely destroyed, leading to the risk of cracking in the subsequent cold extrusion process.

It should be noted that the performing cold extrusion on the first preformed mounting sleeve to obtain a second preformed mounting sleeve, wherein the second preformed mounting sleeve has a second flange surface, which has a diameter greater than that of the flange surface of the mounting sleeve to be manufactured, may specifically include the steps below.

The first preformed mounting sleeve is placed into a 600-ton hydraulic press for cold extruding the first flange surface of the first preformed mounting sleeve using 453-ton pressure so as to expand the first flange surface into a second flange surface to obtain a second preformed mounting sleeve.

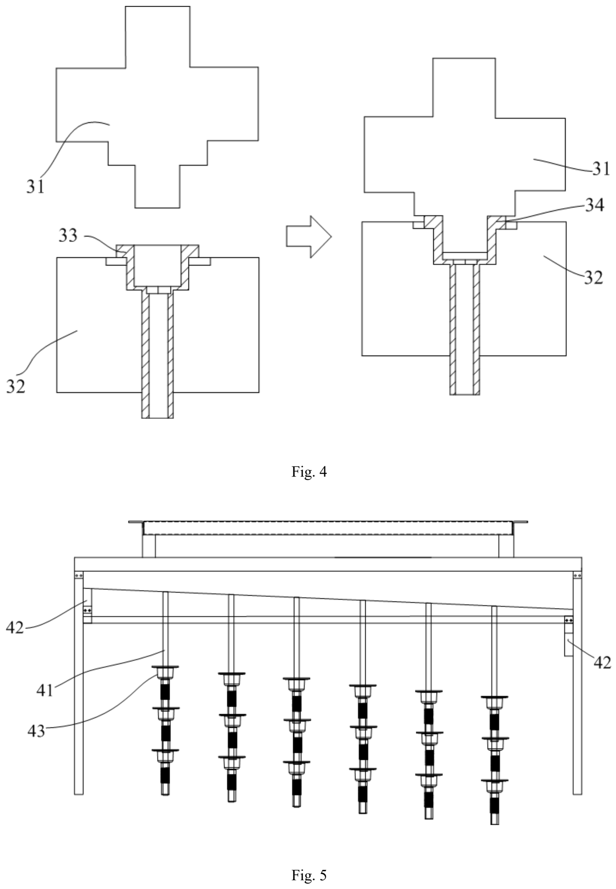

Specifically, referring to Fig. 4, the first preformed mounting sleeve 33 is placed in the cavity of the lower mold 32 of the hydraulic press. The first preformed mounting sleeve 33 is plastically deformed by the extrusion of the upper mold 31. The diameter of the first flange surface of the first preformed mounting sleeve 33 is changed from 65 mm to 79 mm, i. e., to the second flange surface. The thickness of the flange plate corresponding to the first flange surface is changed from 15 mm to 7 mm. Finally, the first preformed mounting sleeve 33 is cold-extruded to the second preformed mounting sleeve 34.

It should be noted that the cutting the second preformed mounting sleeve to obtain a sleeve structure may specifically include the steps below.

Firstly, a hole is drilled in the second preformed mounting sleeve so as to drill through the third preformed hole and the fifth preformed hole so that the third preformed hole and the fifth preformed hole communicate to form an inner cavity hole. Then, the hole wall surface of the inner cavity hole is turned to an appropriate dimensional accuracy at a turning speed of 2000 r/min, and the two end surfaces of the second preformed mounting sleeve are turned to an appropriate length accuracy at a turning speed of 2000 r/min. Finally, the outer wall surface of the second preformed mounting sleeve is turned to an appropriate dimensional accuracy at a turning speed of 2000 r/min, and the external thread 111 is turned on the outer wall surface of the second preformed mounting sleeve to obtain a mounting sleeve. Herein, the sleeve structure can be formed when the external thread 111 is turned on the outer peripheral wall of the second preformed mounting sleeve after the third preformed hole and the fifth preformed hole are drilled through.

Further, after the performing cold extrusion on the first preformed mounting sleeve to obtain a second preformed mounting sleeve, wherein the second preformed mounting sleeve has a second flange surface, which has a diameter greater than that of the flange surface of the mounting sleeve to be manufactured, and before the cutting the second preformed mounting sleeve to obtain a sleeve structure, the method further includes:
successively performing a quenching treatment and a tempering treatment on the second preformed mounting sleeve.

In this embodiment, the hardness of the second preformed mounting sleeve is advantageously increased by sequentially quenching and tempering the second preformed mounting sleeve, and the combination of quenching and tempering.

Further, in sequentially quenching and tempering the second preformed mounting sleeve, the hardness of the quenched and tempered second preformed mounting sleeve is higher than HV 195.

Herein, HV1 is Vickers hardness, expressed as Vickers hardness which is punched out with a load of 1 kg. The hardness which is higher than HV1 195, is HV1 195, or harder than HV1 195.

In this embodiment, after the quenching treatment and tempering treatment, it is necessary to ensure that the hardness of the second preformed mounting sleeve reaches above HV 195. When the hardness is too low, the furnace is returned to perform the quenching treatment and tempering treatment again until the hardness requirements of the mounting sleeve are finally met, so as to facilitate the improvement of the quality of the prepared mounting sleeve.

Further, the quenching treatment includes placing the second preformed mounting sleeve into a quenching furnace and maintaining the temperature at 850-890°C for 60-120 min, and then taking the second preformed mounting sleeve out of the quenching furnace and cooling to room temperature. The tempering treatment includes continuing to place the second preformed mounting sleeve into the quenching furnace and maintaining the temperature at 530-570°C for 60-120 min, then removing the second preformed mounting sleeve from the quenching furnace and cooling to room temperature.

In the quenching treatment, the temperature is held at 850-890°C for 60-120 min, where the temperature may be 850°C 870°C, 890°C, preferably 870°C, and the time of the first heat preservation treatment may be 60 min, 90 min, 120 min, preferably 90 min. In the tempering treatment 60-120 min is held at 530-570°C, where the temperature may be 530°C 550°C, 570°C, preferably 550°C, and the time of the first heat preservation treatment may be 60 min, 90 min, 120 min, preferably 90 min.

In this embodiment, for the quenching treatment, when the temperature is higher than 890°C, the microstructure of the material will be coarsened, the retained austenite will be increased, and the strength and toughness will be deteriorated, which will bring the risk of deformation and cracking to the parts. When the temperature is lower than 850°C, the transformation temperature will not be reached, which can not meet the hardness requirements of the sleeve portions. At the same time, within 60-120 min, the quenching effect is also better, the hardness is better, and it is not easy to deform and crack. For the tempering treatment, when the temperature is higher than 570°C and the time of the first heat preservation treatment is longer than 120 min, the microstructure stability is greatly affected, and the hardness of the material is reduced. When the temperature is less than 530°C and the time of the first heat preservation treatment is less than 60 min, it is unable to effectively reduce the internal stress in the structure of sleeve material, and deformation and cracking may occur in subsequent use.

The sleeve structure of the mounting sleeve is generally subjected to electroplating treatment after the cutting is completed. In a conventional electroplating method for the mounting sleeve, generally, the mounting sleeve is fixed on the fixed hanger, and then enters the electroplating tank containing electroplating solution, so as to realize electroplating. However, in the process of electroplating, the mounting sleeve is fixed, which may cause the same conductive surface on the hanging point of the mounting sleeve to be fixed, resulting in a black spot with weakened film thickness. In addition, since the mounting sleeve has a hollow tubular structure, electric current and plating solution are mainly concentrated on the outer surface of the mounting sleeve during the plating process, resulting in non-uniform thickness of the inner and outer plating layers of the mounting sleeve.

In view of this, after the second preformed mounting sleeve is machined to obtain the sleeve structure, the method further includes the steps below.

Step S5, the sleeve structure is mounted on the swing-type plating hanger, and the sleeve structure is driven to swing up and down by the swing device of the swing-type plating hanger.

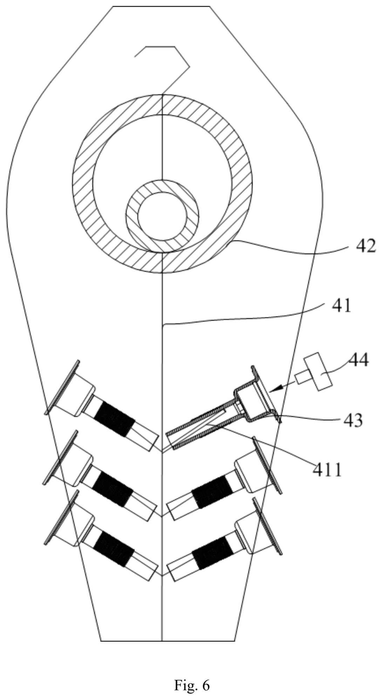

Specifically, referring to Figs. 5 and 6, the swing-type plating hanger includes a conductive hook 41 and two swing devices 42. The conductive hook 41 is provided with a copper electrode 411 extending obliquely upwards, and the two swing devices 42 can swing up and down so as to drive the conductive hook 41 to swing up and down. When the sleeve structure 43 is specifically installed, the sleeve structure 43 can pass through the copper electrode 411, and the flange surface of the sleeve structure 43 faces the anode face. Then, the two swing devices 42 swing up and down, that is to say, the sleeve structure 43 can be driven to swing up and down.

Step S6, the sleeve structure is electroplated by spraying a plating solution by a jet device to an inner cavity of the sleeve structure.

In particular, with continued reference to Figs. 5 and 6, the swing-type plating hanger may also be provided with a jet device 44 in which a plating solution, which may be a zinc-nickel alloy solution, may be stored. The electroplating may be accomplished by spraying the plating solution by the jet device 44 into the interior cavity of the oscillating sleeve structure 43, thereby increasing the corrosion resistance of the sleeve structure.

In this embodiment, since the sleeve structure is swung up and down to prevent the sleeve structure from being fixed, it is possible to improve the problem that black spots are generated due to the decrease of the film thickness of the hanging spots on the sleeve structure. Meanwhile, it is possible to improve the problem that the thickness of the inner and outer plating layers of the sleeve structure is not uniform by performing the plating in a jet manner by the jet flow device.

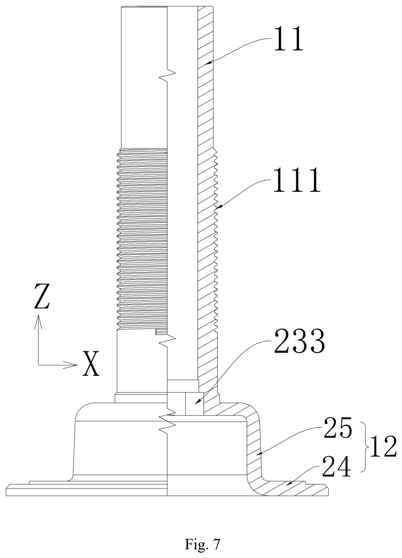

As shown in Fig. 7, embodiments of the present invention also provide a mounting sleeve including a sleeve structure including a sleeve body 11 and a flange plate 12, the sleeve body 11 being integrally formed with the flange plate 12.

It should be noted that the mounting sleeve can be applied to different scenarios, such as a suspension system, a transmission system of an automobile, the connection with an exhaust pipe of the automobile, and the mounting and fixing of a battery box of the automobile. For example, the mounting and fixing of the battery box to a chassis of the vehicle by means of the mounting sleeve is described as follows.

The above-mentioned sleeve body 11 in the prior art can be used as the sleeve body 11 in the present application. The sleeve body 11 and the flange plate 12 can be distributed in the axial direction of the sleeve structure and are integrally formed. The sleeve body 11 is used for vertically penetrating into the battery box. A part of the flange plate 12 is located outside the bottom plate 61 of the battery box and is connected to the bottom plate 61 of the battery box so as to support the battery box from below. Herein, an end of the sleeve body 11 away from the flange plate 12 can be directly or indirectly connected to a chassis of the vehicle so that the battery box can be suspended and mounted to the chassis of the vehicle via the sleeve structure.

The sleeve structure of the mounting sleeve can be manufactured by using the method for manufacturing the mounting sleeve as described above.

In this embodiment, the sleeve body 11 and the flange plate 12 are integrally formed into a sleeve structure, so as to ensure the reliability of the connection between the sleeve body 11 and the flange plate 12, and accordingly improve the sealability between the sleeve body 11 and the flange plate 12 in the mounting sleeve, so as to improve the quality of the mounting sleeve. In addition, the sleeve structure in the sleeve body 11 and the flange plate 12 being integrally formed may also reduce the manufacturing process and correspondingly reduce the manufacturing cost.

When the mounting sleeve is connected to the battery box, the battery box is mounted to the chassis of the vehicle, the sleeve body 11 of the mounting sleeve is arranged to pass through the battery box and can be connected to the chassis, and a part of the flange plate 12 is located below the battery box and is connected to the bottom plate of the battery box, which is equivalent to the case where the flange plate 12 of the mounting sleeve supports the battery box from below so as to mount the battery box to the chassis and prevent the battery box from sinking to ensure a load-bearing effect on the battery box.

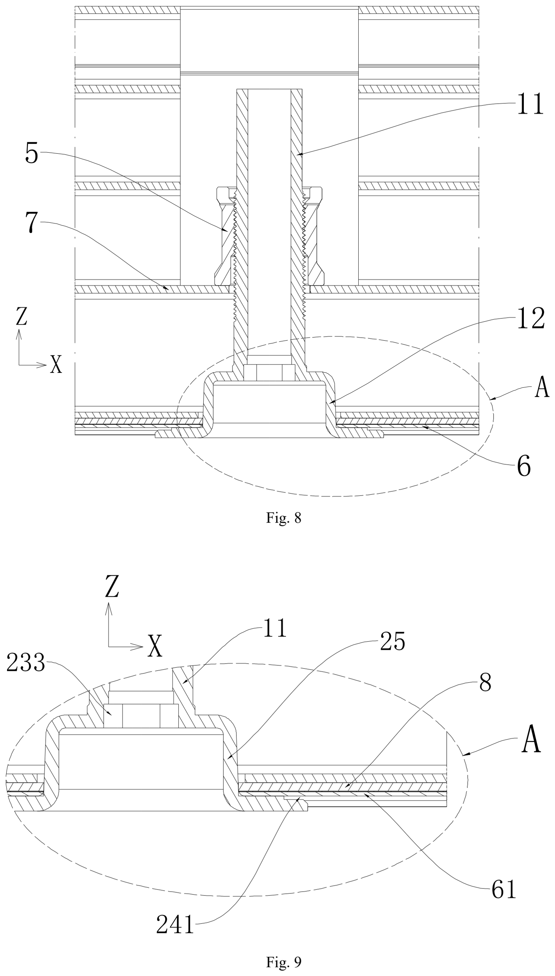

In an embodiment of the present invention, as shown in conjunction with Figs. 7 and 8, the mounting sleeve further includes a sleeve nut 5, the outer wall of the sleeve body 11 is provided with an external thread 111, and the sleeve nut 5 is sheathed outside the sleeve body 11 and is screwed with the external thread 111.

The sleeve body 11 is used for penetrating the intermediate transverse girder 7 of the battery box, and the sleeve nut 5 is used for abutting against the intermediate transverse girder 7 of the battery box.

When the sleeve body 11 passes through the intermediate transverse girder 7 of the battery box, the sleeve nut 5 is sheathed outside the sleeve body 11 and is screwed with the external thread 111. After the sleeve nut 5 is screwed with the external thread 111, the bottom end of the sleeve nut 5 abuts against the intermediate transverse girder 7 of the battery box, so that the entire sleeve structure can be fixed on the intermediate transverse girder 7 by means of the fitting of the sleeve nut 5 and the external thread 111. Here, the sleeve body 11 of the sleeve structure is connected to the intermediate transverse girder 7 of the battery box by means of the sleeve nut 5 and the flange plate 12 is connected to the bottom plate 61 of the battery box. The sleeve body 11 may be connected to the chassis of the vehicle so that the engagement of the sleeve structure with the sleeve nut 5 secures the battery box to the chassis of the vehicle to prevent removal of the battery box from the chassis.

Herein, the height of the external thread 111 is greater than the height of the sleeve nut 5, so that it is possible to rotate the height position of the sleeve nut 5 on the sleeve body 11 until the bottom end of the sleeve nut 5 abuts against the intermediate transverse girder 7, which not only achieves a fixed connection between the sleeve structure and the intermediate transverse girder 7, but also can apply an intermediate transverse girder 7 with different heights.

Herein, the dimension of the sleeve body 11 or the sleeve nut 5 in the Z-axis direction of the coordinate system in Fig. 2 is the height of the sleeve body 11 or the sleeve nut 5.

In an embodiment of the present invention, as shown in conjunction with Figs. 8 and 9, the inner wall of the sleeve body 11 is provided with a hexagonal hole 233 for assisting insertion of a tool to assist fastening of the sleeve nut 5 to the sleeve body 11.

It should be noted that, when the sleeve nut 5 is sleeved on the outside of the sleeve body 11 and is rotated to be fastened, the entire sleeve structure may rotate together with the sleeve nut 5, which may affect the assembly operation of the sleeve structure and the intermediate transverse girder 7. Therefore, by providing a hexagonal hole 233 on the inner wall of the sleeve body 11, such as the inner wall of the bottom end, when the sleeve nut 5 is fastened outside the sleeve body 11, an auxiliary tool, such as a screw rod having a polygonal structure at the end, can be inserted into the flange plate 12 from below until the flange plate 12 is inserted into the hexagonal hole 233. At this time, when the sleeve nut 5 is rotated by another tool, the sleeve nut 5 is rotated with respect to the external thread 111 until the bottom end of the sleeve nut 5 abuts against the intermediate transverse girder 7. As the sleeve body 11 of the sleeve structure is locked by the auxiliary tool during the entire rotation of the sleeve nut 5, it is possible to effectively prevent the sleeve structure from rotating together with the sleeve nut 5, thereby improving the assembly efficiency of the sleeve structure with the intermediate transverse girder 7.

Here, the hexagonal hole 233 is matched with the formation and inner diameter of the auxiliary tool. If the hexagonal hole 233 is a regular polygonal groove such as a regular hexagonal groove, the auxiliary tool may be a hexagonal-headed bolt.

In addition, the above-mentioned hexagonal hole 233 may be a hole of other shapes, such as a four-corner hole, a strip-shaped hole, etc. as long as a variety of holes capable of facilitating the insertion of other tools to assist the sleeve nut 5 to rotate relative to the sleeve body 11 are suitable for the present technical solution, and are not particularly limited herein.

In an embodiment of the present invention, the sleeve body 11 and the flange plate 12 are integrally formed using the cold heading treatment, the hot forging process, or the spin forming process.

It should be noted that the sealability between the sleeve body 11 and the flange plate 12 is not only improved, but also the mechanical strength and rigidity of the sleeve structure can be ensured by performing a cold heading treatment on an initial bar (a steel material or an aluminum material) through a cold heading treatment and at least one punch die by a cold heading machine, and finally finishing the die-cut workpiece by a numerically controlled lathe to form the sleeve structure in which the sleeve body 11 and the flange plate 12 are integrally formed. The cold heading treatment is well known in the art and will not be described in detail herein.

The sleeve body 11 and the flange plate 12 may also be integrally formed by the hot forging process or the spin forming process, which will not be described in detail herein since the hot forging process or the spin forming process is the prior art.

In an embodiment of the present invention, as shown in conjunction with Figs. 7-9, the mounting sleeve further includes a fastening bolt and a fastening nut. The flange plate 12 includes a second pedestal 25 and a first pedestal 24. The second pedestal 25 is a cylindrical structure. The diameter of the cylindrical structure is greater than the diameter of the sleeve body 11. One end of the cylindrical structure is connected to the bottom end of the sleeve body 11, and the other end of the cylindrical structure is folded out to extend to form the first pedestal 24.

A head end of the fastening bolt is located in the second pedestal 25; and a screw part of the fastening bolt extends through the sleeve body 11 and is fixed by the fastening nut.

As an example of mounting a battery box to a chassis of a vehicle using a mounting sleeve, the first pedestal 24 is located outside the bottom plate 61 of the battery box and is connected to the bottom plate 61 of the battery box.

Specifically, the first pedestal 24 is provided below the battery box and is connected to the bottom plate 61 of the battery box, and the first pedestal 24, which corresponds to a sleeve structure, supports the entire battery box from below so as to prevent the battery box from sinking.

The middle portion of the sleeve body 11 may fix the entire sleeve structure to the intermediate transverse girder 7 of the battery box by means of the sleeve nut 5, in other words, may be screwed to the external thread 111 of the sleeve body 11 by means of the sleeve nut 5 so as to be pressed against the intermediate transverse girder 7.

The part where the first pedestal 24 is connected to the sleeve body 11 may be defined as a second pedestal 25. The second pedestal 25 is of the same shape as the sleeve body 11. In other words, the second pedestal 25 is also of a cylindrical structure, and the diameter of the second pedestal 25 is greater than the diameter of the sleeve body 11, so that when the sleeve structure is connected to the chassis of the vehicle, the first pedestal 24, the second pedestal 25, the sleeve body 11 of the mounting sleeve and the chassis can be passed through successively from bottom to top by means of the threaded part of the fastening bolt. In other words, the mounting sleeve and the battery box are all located below the chassis, and then sheathed on the uppermost end of the screw part of the fastening bolt by the fastening nut so as to realize the connection between the fastening bolt and the chassis. At this time, the head end of the fastening nut is located in the second pedestal 25, so that the whole battery box is mounted smoothly to the chassis of the vehicle from below by the first pedestal 24 of the mounting sleeve and the fastening bolt, from the middle region by the sleeve nut 5 of the mounting sleeve, and from above by the fastening nut of the mounting sleeve suspends. Since the head end of the fastening nut is located in the second pedestal 25, and the diameter of the cylindrical structure is greater than the diameter of the sleeve body 11, in other words, the head end of the fastening bolt positions and supports the second pedestal 25 of the sleeve structure from below so as to prevent the head end of the fastening bolt from entering the sleeve body 11. Furthermore, since the head end of the fastening bolt is located in the second pedestal 25, in other words, the head end of the fastening bolt does not extend beyond the lowermost part of the battery box, which can reduce damage to the fastening bolt by water or other foreign matter on the road during running of the vehicle.

In an embodiment of the present invention, as shown in connection with Fig. 9, the outer edge of the first pedestal 24 is provided with an annular groove portion 241 provided coaxially with the second pedestal 25, and a sealant structure is provided in the annular groove portion 241.

When the sleeve body 11 of the sleeve structure vertically passes through the bottom plate 61 of the battery box and the intermediate transverse girder 7, the bottom of the first pedestal 24 is parallel to the bottom plate 61 of the battery box and is connected to the bottom plate 61, so as to increase the contact area between the first pedestal 24 and the bottom plate 61 to improve the supporting effect of the battery box from below. In addition, there is a vertical space between the annular groove portion 241 and the bottom plate 61, and the vertical space is used for applying a sealant structure, thereby not only increasing the connection strength and the connection stability of the first pedestal 24 and the bottom plate 61 of the battery box, but also preventing foreign matter such as dust from the outside from entering the interior of the battery box from the connection between the first pedestal 24 and the bottom plate 61, so as to achieve the connection and sealing of the sleeve structure and the battery box.

Here, the annular groove portion 241 may be located at the outer periphery of the first pedestal 24 or may be located at an intermediate position of the first pedestal 24, as long as various positions satisfying the sealing action between the first pedestal 24 and the bottom plate of the battery box are suitable for the present technical solution, and the description thereof will not be repeated here.

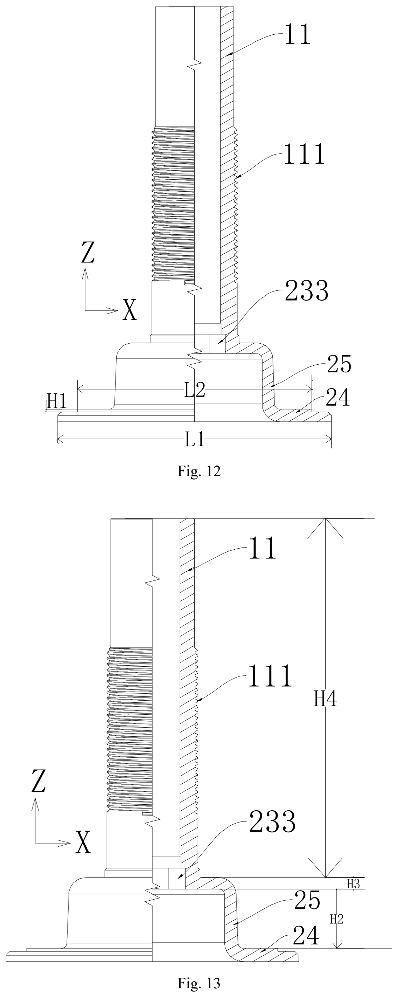

With reference to Fig. 12, in an embodiment of the present invention, the sealant structure has a thickness in the range of 0.8 mm to 1.2 mm in the axial direction of the first pedestal 24; and the radial dimension of the annular groove portion 241 is 0.10 to 0.15 times the diameter of the first pedestal.

It should be noted that the thickness of the sealant structure refers to the dimension in the axial direction of the mounting sleeve (the Z-axis direction in Fig. 12). L1 in Fig. 12 refers to the diameter of the first pedestal 24 (the dimension of the bottom of the first pedestal 24 in Fig. 12 in the X-axis direction). The annular groove portion 241 is of a ring structure. The radial dimension of the annular groove portion 241 refers to the dimension of the annular groove portion 241 in the X-axis direction of the coordinate system in Fig. 12 (which can also be understood as the dimension of the annular groove after subtracting the diameter of the outer circle from the diameter of the inner circle). L2 in Fig. 12 denotes the dimension of the portion where the diameter of the bottom of the first pedestal 24 is reduced by the radial dimension of the annular groove portion 241.

In particular, since the thickness of the sealant structure is in the range of 0.8 mm to 1.2 mm, the thickness of the applied sealant structure is ensured, and an excessively small thickness may result in an insufficient bonding strength. An excessively large thickness may cause waste.

Since the radial dimension of the annular groove portion 241 is 0.10 to 0.15 times the diameter of the first pedestal 24, in other words, the diameter L2 of the portion of the bottom diameter of the first pedestal 24 minus the radial dimension of the annular groove portion 241 can be selected in the range of 0.85 to 0.9 times the diameter of the first pedestal 24. If L2 is too small, the adhesive area of the annular groove portion 241 where the sealant is applied is too large, resulting in waste of the adhesive, and if L2 is too large, the adhesive area is not enough, resulting in insufficient adhesive strength.

Referring to Fig. 13, in an embodiment of the present invention, when the inner wall of the sleeve body 11 is provided with a hexagonal hole 233, the height of the hexagonal hole 233 ranges from 5.5 mm to 6.5 mm. The second pedestal 25 has a height in the range of 15 mm to 18 mm.

Note that H3 in Fig. 13 indicates the height or depth of the hexagonal hole 233 in the axial direction of the mounting sleeve (the coordinate system Z-axis direction in Fig. 13). H2 in Fig. 13 indicates the height of the second pedestal 25 in the axial direction of the mounting sleeve (the coordinate system Z-axis direction in Fig. 13). H4 in Fig. 13 indicates the height of the sleeve body 11 in the axial direction of the mounting sleeve (the coordinate system Z-axis direction in Fig. 13).

Specifically, the range of the height of the hexagonal hole 233 ensures that sufficient supporting strength is provided when the sleeve nut 5 is tightened to the external thread 111 of the first preformed rod 22. The insufficient strength is provided if the height of the hexagonal hole 233 is too small, which may easily cause the auxiliary tool to slip off. The machining time of the hexagonal hole 233 is increased if the height of the hexagonal hole 233 is too large.

The height of the second pedestal 25 is in such a range that the heads of the fastening bolts do not go beyond the lowermost part of the battery box. If the height of the second pedestal 25 is too small, it is not good for preventing the collision of water and foreign matter. If the height of the second pedestal 25 is too large, it is not good for realizing the cold heading treatment.

The sleeve body 11 may have a height ranging from 90 mm to 100 mm, and can be specifically determined according to the intermediate transverse girder and the upper cover of the battery box.

In an embodiment of the present invention, the inner cavity and/or the outer surface of the sleeve structure is provided with an electroplated layer.

It should be noted that the corrosion resistance of the sleeve structure can be effectively improved by adding a plating to the inner cavity of the sleeve structure, or to the outer surface of the sleeve structure, or to both the inner cavity and the outer surface of the sleeve structure.

Here, the material of the electroplated layer may be zinc-nickel, the electroplated layer may be at least 8 microns thick, preferably 8-15 microns.

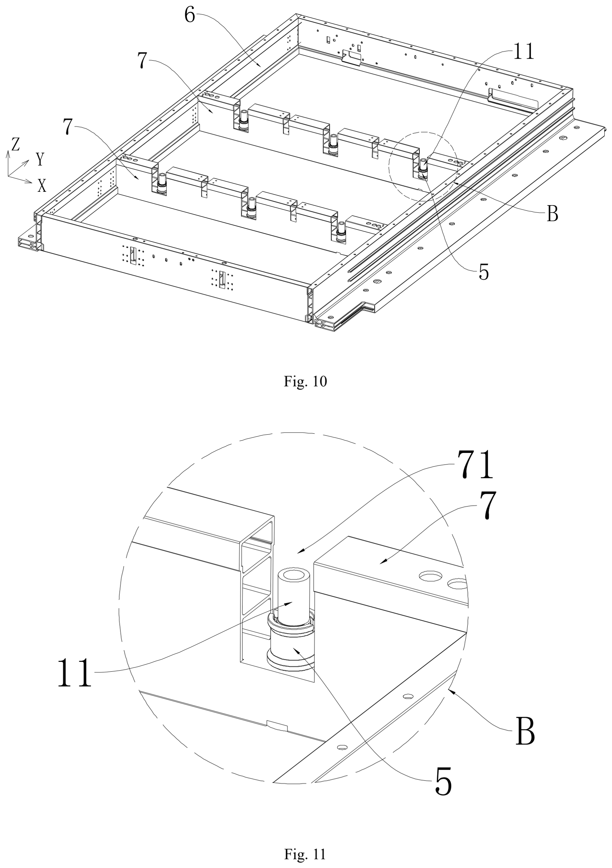

Referring to Fig. 10, the embodiment of the present invention also provides a battery box assembly including a battery box and the mounting sleeve as described above, wherein the battery box assembly further includes a battery pack; the battery box includes a box body 6 and an intermediate transverse girder 7 which is provided in the box body to divide the box body 6 into at least two cavities within which the battery pack is mounted.

It should be noted that at least one intermediate transverse girder 7 is mounted inside the box body 6. Therefore, the inside of the box body 6 can be divided into at least one cavity by the intermediate transverse girder 7, and the cavity is used for mounting the battery pack. Herein, the box body 6 may include a bottom plate 61 and four side plates. In other words, the four side plates enclose a rectangular frame and enclose the bottom plate 61 to form the whole box body 6. If the number of the intermediate transverse girders 7 is multiple, the multiple intermediate transverse girders 7 may be distributed at intervals along the extension direction (length direction) of the box body 6 inside the box body 6. If the number of the intermediate transverse girders 7 is two (as shown in figure 10), the inside of the box body 6 may be divided into three cavities.

Here, the extension direction of the box body 6 may be parallel to the Y-axis direction of the coordinate system of Fig. 10.

The battery box assembly has at least the full technical effect of the mounting sleeve, which will not be described in more detail herein.

In an embodiment of the present invention, as shown in conjunction with Figs. 10 and 11, a plurality of grooves 71 are formed at intervals on a side of the intermediate transverse girder 7 away from the bottom plate 61 of the box body 6. The sleeve structure of the mounting sleeve passes through the bottom plate 61 and the grooves 71 of the intermediate transverse girder 7 in sequence. The sleeve nut 5 of the mounting sleeve is located in the groove 71 and abuts against the intermediate transverse girder 7.

It should be noted that at least two grooves 71 are provided on each intermediate transverse girder 7, and the number of the grooves 71 is the same as the number of the mounting sleeves. For example, in Fig. 10, three grooves 71 can be provided on each intermediate transverse girder 7, and a mounting sleeve is provided at each groove 71. Specifically, the first pedestal 24 of the sleeve structure is located below the bottom plate 61 of the battery box, and the sleeve body 11 of the sleeve structure can be connected to the chassis of the vehicle via fastening bolts and fastening nuts after passing through the bottom plate 61 of the battery box and the intermediate transverse girders 7 from bottom to top. The sleeve nut 5 is sleeved over the external thread 111 of the sleeve body 11 and abuts against the intermediate transverse girder 7, so that not only abutment of the sleeve structure against the intermediate transverse girder 7 is achieved, but also the sleeve nut 5 is located in the groove 71. In other words the sleeve nut 5 is not raised above the groove 71, so that the sleeve nut 5 does not interfere with the connection of the intermediate transverse girder 7 of the battery box to the chassis of the vehicle.

In an embodiment of the present invention, as shown in conjunction with Fig. 9, the battery box further includes a water cooling plate 8 provided inside the box body 6 and connected in contact with the bottom wall of the battery pack. The mounting sleeve penetrates through the bottom plate 61 of the box body 6, the water cooling plate 8, and the intermediate transverse girder 7 in sequence.

It should be noted that the water cooling plate 8 is provided at the bottom wall of the box body 6, for example, the upper part of the bottom plate 61, and the water cooling plate 8 is connected to the bottom plate 61 of the box body 6. The battery pack is mounted in the battery box and the bottom of the battery pack is connected in contact with the water cooling plate 8, so that not only the battery pack is cooled by the water cooling plate 8, but also the water cooling plate 8 is located inside the box body 6. Thus, the water cooling plate 8 can be prevented from being hit by foreign matter on the road during driving of the vehicle, thereby achieving safety protection of the water cooling plate 8.

When the sleeve structure of the mounting sleeve penetrates into the battery box, the sleeve structure of the mounting sleeve penetrates through the bottom plate 61, the water cooling plate 8 and the intermediate transverse girder 7 in sequence.

Embodiments of the present invention also provide a vehicle including a battery box assembly as described above, and further including a chassis to which the battery box assembly is mounted.

Note that a fastening bolt in the battery box assembly passes through the bottom plate 61 of the battery box, and the water cooling plate 8 and the intermediate transverse girder 7 are connected to the chassis via a fastening nut, so as to fixedly mount the battery box on the chassis. The vehicle may be an electric automobile, or may be any other vehicle that requires the battery box assembly to be mounted on the chassis, which will not be particularly limited here.

The vehicle has at least all the technical effects of the battery box assembly, which will not be described in detail herein.

Although the present invention has been described above, the scope of protection of the present invention is not limited thereto. Various changes and modifications may be effected by one skilled in the art without departing from the spirit and scope of the present invention. Such changes and modifications fall within the scope of protection of the present invention.

## Claims

1. A method for manufacturing a mounting sleeve, **characterized in that** the mounting sleeve comprises a sleeve structure comprising a sleeve body (11) and a flange plate (12); the sleeve body (11) is integrally formed with the flange plate (12); wherein the method for manufacturing the mounting sleeve comprises:
performing cold heading on a bar (2) to obtain a first preformed mounting sleeve (33), wherein the first preformed mounting sleeve (33) has a first flange surface, which has a diameter smaller than that of a flange surface of the mounting sleeve to be manufactured;
performing a spheroidizing annealing treatment on the first preformed mounting sleeve (33);
performing cold extrusion on the first preformed mounting sleeve (33) to obtain a second preformed mounting sleeve (34), wherein the second preformed mounting sleeve (34) has a second flange surface, which has a diameter greater than that of the flange surface of the mounting sleeve to be manufactured; and
cutting the second preformed mounting sleeve (34) to obtain a sleeve structure (43).

2. The method for manufacturing the mounting sleeve according to claim 1, **characterized in that** the performing cold heading on a bar comprises:
performing a first cold heading treatment on the bar (2) by a cold header to form a first preformed rod (22) by strongly constraining a lower part of the bar (2);
performing a second cold heading treatment on the bar (2) by the cold header to upset an upper part of the bar (2) to form a first preformed truncated cone (23);
performing a third cold heading treatment on the bar (2) by the cold header to back-extrude and form a first preformed hole (231) on the first preformed truncated cone (23);
performing a fourth cold heading treatment on the bar (2) by the cold header to back-extrude a second preformed hole (221) on the first preformed rod (22);
performing a fifth cold heading treatment on the bar (2) by the cold header so as to back-extrude and stretch the first preformed hole (231) into a third preformed hole (232) and back-extrude and stretch the second preformed hole (221) into a fourth preformed hole (222); and
performing a sixth cold heading treatment on the bar (2) by the cold header to back-extrude and form a hexagonal hole (233) at the bottom of the third preformed hole (232) and back-extrude and stretch the fourth preformed hole (222) into a fifth preformed hole (223).

3. The method for manufacturing the mounting sleeve according to claim 2, **characterized in that** the strong constraint ratio of the first cold heading treatment is 35%-41%; and/or,
the upsetting ratio of the second cold heading treatment is 27%-33%; and/or,
the back-extrusion ratio of the third cold heading treatment is 13%-19%; and/or,
the back-extrusion ratio of the fourth cold heading treatment is 29%-35%; and/or,
the back-extrusion ratio of the fifth cold heading treatment is 47%-53%; and/or,
the back-extrusion ratio of the sixth cold heading treatment is 10%-14%.

4. The method for manufacturing the mounting sleeve according to claim 1, **characterized in that** the performing a spheroidizing annealing treatment on the first preformed mounting sleeve (33) comprises:
placing the first preformed mounting sleeve (33) into a spheroidizing degradation furnace, and performing a first heat preservation treatment under the conditions of 660-700°C, and then performing a second heat preservation treatment under the conditions of 380-420°C.

5. The method for manufacturing the mounting sleeve according to claim 4, **characterized in that** the time of the first heat preservation treatment is 7-9 h, and the time of the second heat preservation treatment is 1-3 h.

6. The method for manufacturing the mounting sleeve according to claim 1, **characterized in that** after the performing cold extrusion on the first preformed mounting sleeve (33) to obtain a second preformed mounting sleeve (34), wherein the second preformed mounting sleeve (34) has a second flange surface, which has a diameter greater than that of the flange surface of the mounting sleeve to be manufactured, and before the cutting the second preformed mounting sleeve (34) to obtain a sleeve structure (43), the method further comprises:
successively performing a quenching treatment and a tempering treatment on the second preformed mounting sleeve (34).

7. The method for manufacturing the mounting sleeve according to claim 6, **characterized in that** the hardness of the second preformed mounting sleeve (34) after the quenching treatment and the tempering treatment is above HV1 195;

8. The method for manufacturing the mounting sleeve according to claim 6, **characterized in that** the quenching treatment comprises placing the second preformed mounting sleeve (34) into a quenching furnace and maintaining the temperature at 850-890°C for 60-120 min, and then taking the second preformed mounting sleeve (34) out of the quenching furnace and cooling to room temperature; and
the tempering treatment comprises: continuing to place the second preformed mounting sleeve (34) into the quenching furnace and maintaining the temperature at 530-570°C for 60-120 min, then removing the second preformed mounting sleeve (34) from the quenching furnace and cooling to room temperature.

9. The method for manufacturing the mounting sleeve according to claim 1, **characterized by**, after the cutting the second preformed mounting sleeve (34) to obtain a sleeve structure (43), further comprising:
mounting the sleeve structure (43) on a swing-type plating hanger, and driving the sleeve structure (43) to swing up and down by a swing device (42) of the swing-type plating hanger; and
electroplating the sleeve structure (43) by spraying a plating solution by a jet device (44) to an inner cavity of the sleeve structure (43).

10. A mounting sleeve, **characterized by** comprising a sleeve structure wherein the sleeve structure comprises a sleeve body (11) and a flange plate (12), the sleeve body (11) being integral with the flange plate (12).

11. The mounting sleeve according to claim 10, **characterized by** comprising a sleeve nut (5), wherein the outer wall of the sleeve body (11) is provided with an external thread (111); and the sleeve nut (5) is sheathed outside the sleeve body (11) and is screwed with the external thread (111).

12. The mounting sleeve according to claim 11, **characterized in that** the inner wall of the sleeve body (11) is provided with a hexagonal hole (233) for the insertion of an auxiliary tool to assist the fastening of the sleeve nut (5) to the sleeve body (11).

13. The mounting sleeve according to claim 10, **characterized in that** the sleeve body (11) and the flange plate (12) are integrally formed using the cold heading treatment, the hot forging process, or the spin forming process.

14. The mounting sleeve according to any one of claims 10 to 13, **characterized by** further comprising a fastening bolt and a fastening nut, wherein the flange plate (12) comprises a second pedestal (25) and a first pedestal (24); the second pedestal (25) is a cylindrical structure; the diameter of the cylindrical structure is greater than the diameter of the sleeve body (11); one end of the cylindrical structure is connected to one end of the sleeve body (11); the other end of the cylindrical structure is folded outwardly to extend to form the first pedestal (24);
a head end of the fastening bolt is located in the second pedestal (25); and a screw part of the fastening bolt extends through the sleeve body (11) and is fixed by the fastening nut.

15. The mounting sleeve according to claim 14, **characterized in that** the outer edge of the first pedestal (24) is provided with an annular groove portion (241) provided coaxially with the second pedestal (25); and the annular groove portion (241) is provided with a sealant structure therein.

16. The mounting sleeve according to claim 15, **characterized in that** the sealant structure has a thickness in the range of 0.8 mm to 1.2 mm in the axial direction of the first pedestal (24); and the radial dimension of the annular groove portion (241) is 0.10 to 0.15 times the diameter of the first pedestal (24).

17. The mounting sleeve according to claim 14, **characterized in that** when the inner wall of the sleeve body (11) is provided with the hexagonal hole (233), the height of the hexagonal hole (233) ranges from 5.5 mm to 6.5 mm; and the second pedestal (25) has a height ranging from 15 mm to 18 mm.

18. The mounting sleeve according to claim 10, **characterized in that** the inner cavity and/or the outer surface of the sleeve structure is provided with an electroplated layer.

19. A battery box assembly, **characterized by** comprising a battery box and the mounting sleeve according to any one of claims 10 to 18, wherein the battery box assembly further comprises a battery pack; the battery box comprises a box body (6) and an intermediate transverse girder (7) which is provided in the box body (6) to divide the box body (6) into at least two cavities within which the battery pack is mounted.

20. The battery box assembly according to claim 19, **characterized in that** a plurality of grooves (71) are spaced apart at a side of the intermediate transverse girder (7) away from the bottom plate (61) of the box body (6); the sleeve structure of the mounting sleeve is successively provided through the bottom plate (61) and the grooves (71) of the intermediate transverse girder (7); and the sleeve nut (5) of the mounting sleeve is located in the groove (71) and abuts against the intermediate transverse girder (7).

21. The battery box assembly according to claim 19, **characterized by** further comprising a water cooling plate (8) provided inside the box body (6) and connected in contact with a bottom wall of the battery pack; and the mounting sleeve penetrates through a bottom plate (61) of the box body (6), the water cooling plate (8) and the intermediate transverse girder (7) in sequence.

22. A vehicle, **characterized by** comprising the battery box assembly according to any one of claims 19 to 21, and a chassis to which the battery box assembly is mounted.
